# EUROPÄISCHE PATENTSCHRIFT

(11) **EP 2 896 085 B1**
(45) Veröffentlichungstag und Bekanntmachung des Hinweises auf die Patenterteilung: **08.11.2017**
(21) Anmeldenummer: 13762815.2
(22) Anmeldetag: 13.09.2013
(51) Int. Cl.: H01M 4/04, H01M 4/134, H01M 4/136, H01M 4/38, H01M 4/62, H01M 4/66, H01M 10/052, H01M 10/056, H01M 10/44, H01M 10/42

(54) **LI-S-BATTERIE MIT HOHER ZYKLENSTABILITÄT UND VERFAHREN ZU DEREN BETREIBEN**
LI-S BATTERY WITH HIGH CYCLE STABILITY AND A METHOD FOR OPERATING SAME
BATTERIE LITHIUM-SOUFRE À HAUTE STABILITÉ AU CYCLAGE ET PROCÉDÉ POUR LA FAIRE FONCTIONNER

(30) Priorität: 14.09.2012 DE 102012018622
(43) Veröffentlichungstag der Anmeldung: 22.07.2015
(73) Patentinhaber: FRAUNHOFER-GESELLSCHAFT zur Förderung der angewandten Forschung e.V., 80636 München (DE); Technische Universität Dresden, 01069 Dresden (DE)
(72) Erfinder: BRÜCKNER, Jan, 01307 Dresden (DE); ALTHUES, Holger, 01309 Dresden (DE); KASKEL, Stefan, 01159 Dresden (DE); THIEME, Sören, 01324 Dresden (DE); BAUER, Ingolf, 01445 Radebeul (DE)
(74) Vertreter: Pfenning, Meinig & Partner mbB
(86) Internationale Anmeldenummer: PCT/EP2013/068977
(87) Internationale Veröffentlichungsnummer: WO 2014/041108

(56) Entgegenhaltungen:
- EP-A1- 2 306 563
- EP-A2- 2 458 664
- US-A1- 2004 197 660
- US-A1- 2008 100 264
- US-A1- 2011 200 883
- US-A1- 2011 281 156
- US-A1- 2012 229 096

## Beschreibung

Es wird eine Li-S-Batterie bereitgestellt, welche eine verbesserte Zyklenstabilität und gleichzeitig nahezu perfekte Ladeeffizienz im Verhältnis zu Li-S-Batterien aus dem Stand der Technik aufweist.

Bei bisherigen Ausführungsformen von Li-S-Batterien werden in der Regel Li-Metall-Anoden eingesetzt. Diese führen zu hohen Kapazitäten und sind leicht herstellbar, allerdings sind einige Nachteile damit verbunden. Li-Metall ist sehr reaktiv und kann bei der Produktion und bei der Verwendung der Zellen zu einer Sicherheitsproblematik (sog. "thermal run-away" ab dem Schmelzpunkt von 181° C für metallisches Lithium) führen. Ferner neigt Li-Metall zu dentritischem Wachstum bei der Zyklierung, dadurch kommt es zu einer starken Erhöhung der Oberfläche und zur Steigerung der Reaktivität.

Außerdem können durch die aufgewachsenen Dendriten Kurzschlüsse in der Zelle verursacht werden, was zur Zerstörung der Zelle, sowie zu zusätzlichen Sicherheitsproblemen führt. Letztlich ist die Zyklenstabilität in der Regel bei Verwendung von metallischem Lithium, vor allem aufgrund des dendritischen Wachstums von Lithium, auf 100 bis maximal 200 Zyklen begrenzt.

Um dieses Problem zu lösen wurden bisher Graphit-Anoden in Li-Batterien eingesetzt. Die Stabilität und Sicherheit konnte somit entscheidend verbessert werden, allerdings auf Kosten einer geringeren Kapazität der Batterien. Für eine Schwefelbatterie ergibt sich das Problem, dass Graphitanoden aus verschiedenen Gründen nicht in Frage kommen. Als Beispiel hierfür ist die Interkalation von Lösungsmittel des Schwefelelektrolyten zu nennen, die zur Zerstörung der Graphitanode führt.

Erste Ansätze zeigen das Potential auf, die Lithiumanode durch Legierungsanoden (Si, Sn) mit sehr hoher Kapazität zu ersetzen. Diese Legierungsanoden lösen zwar prinzipiell die Probleme, die Li-Dendriten mit sich bringen, sind bisher aber auch nicht besonders zyklenstabil. Problematisch hierbei ist die starke Ausdehnung von Si (und Sn), welche durch die Lithiierung hervorgerufen wird. Die Ausdehnung beträgt beispielsweise 320% für Si und 260% für Sn (Zhang, W.-J., Journal of Power Sources, 196:13-24, 2011).

Gute Si und Sn-Anoden zu produzieren (vor allem für Li-Ionen-Zellen) ist Gegenstand aktueller Forschung. Publikationen zu Si und Sn in Li-S-Zellen zeigen die prinzipielle Anwendbarkeit dieser Legierungsanoden, aber belegen die Zykleninstabilität dieser Systeme. Der Grund für die Zykleninstabilität sind in der Regel Degradationseffekte auf Anoden- und auch Kathodenseite.

Schwierigkeiten ergeben sich auch aus der Lithiierung entweder der Anode oder der Kathode. So konnte nur eine sehr geringe Teillithiierung und damit geringe Kapazität, erreicht werden, falls Kupfer als Trägersubstrat und Stromableiter für ein Anodenmaterial (z. B. Siliziumdünnschicht) verwendet wurde (Elazari, R. et al., Electrochemistry Communications, 14:21-24, 2012). Für eine Anode aus Silizium-Nanodraht konnte ebenfalls nur eine sehr geringe Kapazität erreicht werden (Yang, Y. et al., Nano Letters, 10:1486-1491, 2010).

Ferner konnte bei der Verwendung einer Kathode aus Kohlenstoff-Schwefel-Kompositmaterial und einer lithiierten Anode aus Kohlenstoff-Silizium-Kompositmaterial eine hohe Kapazität von ca. 300 mAh/g erreicht werden, aber nur eine geringe Stabilität erzielt werden.

Es sind auch Li-S-Zellen auf der Basis von Li-Metall-Anoden bekannt, in welchen eine besonders aufwendige Beschichtungen von Lithium verwendet wurde (US 7,358,012 B2).

Die US 2011/200883 A1 offenbart eine Vorrichtung, die eine Kathode mit einer poröse kohlenstoffbasierte Struktur enthält, wobei in den Poren der Struktur ein lithiiertes schwefelbasiertes Material angeordnet ist, und die eine Anode enthält, die Silizium-Nanodrähte aufweist.

Die EP 2306 563 A1 offenbart eine Batterie, welche eine Anode aufweist, die ein Elektrodenaktivmaterial, einen Binder mit fibrilliertem PTFE und ein amorphes Harz enthält.

Ausgehend hiervon war es die Aufgabe der vorliegenden Erfindung, Li-S-Batterien bereitzustellen, welche sowohl eine hohe Kapazität als auch eine hohe Zyklenstabilität aufweisen, ein Verfahren zum Betrieb einer erfindungsgemäßen Li-S-Batterie bereitzustellen und Verwendungen der erfindungsgemäßen Li-S-Batterie bereitzustellen.

Die Aufgabe wird gelöst durch die Li-S-Batterie gemäß Anspruch 1 und das Verfahren zum Betreiben der erfindungsgemäßen Li-S-Batterie gemäß Anspruch 15. Die abhängigen Ansprüche zeigen vorteilhafte Weiterbildungen auf.

Es wird somit eine Li-S-Batterie bereitgestellt, umfassend
a) eine Kathode enthaltend ein elektrisch leitfähiges Kohlenstoffmaterial, ein elektrochemisch aktives Kathodenmaterial, welches Schwefel enthält oder daraus besteht und zumindest teilweise fibrillären Kunststoff;
b) eine Anode enthaltend ein leitendes Substrat, welches zumindest bereichsweise mit Silizium und/oder Zinn beschichtet ist;
c) einen zwischen Kathode und Anode angeordneten Lithium-haltigen Flüssigelektrolyten, Gel-Elektrolyten und/oder Festelektrolyten.

Überraschenderweise wurde festgestellt, dass die erfindungsgemäßen Batterien eine nahezu perfekte Ladeffizienz aufweisen, die auch bei über 1000 Lade-/Entlade-Zyklen quasi unverändert auf dem maximal möglichen Wert bleibt.

Ein weiterer wesentlicher Vorteil der Li-S-Batterie ist, dass sie einen einfachen Aufbau und ein verhältnismäßig geringes Gewicht aufweist. Ferner weist die Batterie eine höhere Flächenkapazität und höhere gravimetrische Kapazität im Vergleich zu Li-S-Batterien aus dem Stand der Technik auf. Es können Kapazitätswerte von ≥ 1050 mAh/g und sogar ≥ 1500 mAh/g und eine Flächenkapazität von > 4 mAh/cm² erreicht werden.

Ferner weist die Batterie eine hohe Langzeitstabilität auf, da die Kathode der Li-S-Batterie fibrillären Kunststoff und/oder hochporösen Kohlenstoff enthält und damit hohen mechanischen Kräfteeinwirkungen standhält. Diese Matrixstruktur für Schwefel und schwefelhaltige Spezies weist eine hohe innere Oberfläche und großes Porenvolumen zur Adsorption von Polysulfiden sowie Abscheidung/Kontaktierung einer dünnen Schicht von S und/oder Li₂S auf. Hierdurch kann eine Volumenexpansion des Aktivmaterials durch freies Porenvolumen kompensiert wird.

Zusammenfassend weist die erfindungsgemäße Li-S-Batterie ein gegenüber dem Stand der Technik verbessertes Ratenverhalten und auch eine verbesserte Stabilität auf.

Eine Kathode, wie sie in der erfindungsgemäßen Li-S-Batterie enthalten sein kann, ist z.B. aus der DE 10 2012 203 019.0 bekannt. Bezüglich möglicher Ausgestaltungen der Kathode sowie möglicher Herstellungsverfahren wird auf diese Patentanmeldung verwiesen, deren Offenbarungsgehalt insofern auch zum Gegenstand der vorliegenden Anmeldung gemacht wird.

In einer bevorzugten Ausgestaltungsform der Erfindung ist die Batterie dadurch gekennzeichnet, dass die Kathode, bezogen auf das Gesamtgewicht der Kathode,
a) 40-90 Gew.-%, bevorzugt 50-80 Gew.-%, besonders bevorzugt 60-75 Gew.-% elektrochemisch aktives Kathodenmaterial;
b) 1-55 Gew.-%, bevorzugt 5-35 Gew.-%, besonders bevorzugt 10-25 Gew.-%, elektrisch leitfähiges Kohlenstoffmaterial; und/oder
c) 2-50 Gew.-%, bevorzugt 3-20 Gew.-%, besonders bevorzugt 5-10 Gew.-%, Kunststoff;
enthält.

Die Kathode der erfindungsgemäßen Batterie kann ferner
a) ein elektrochemisch aktives Kathodenmaterial enthaltend Schwefel oder eine Lithium-Schwefel-Verbindung, bevorzugt Li₂S;
b) als elektrisch leitfähigen Kohlenstoffmaterial porösen Kohlenstoff, Ruß, Graphen, Graphit, Diamond Like Carbon (DLC), Graphite-Like-Carbon (GLC), Kohlenstofffasern, Kohlenstoffnanoröhren und/oder Kohlenstoffhohlkugeln, und/oder
c) als teilweise fibrillären Kunststoff teilweise fibrilläres Polytetrafluorethylen;
   enthalten.

In einer bevorzugten Ausgestaltungsform weisen
a) die Kohlenstoffnanoröhren einen Durchmesser von 0,1 bis 100 nm, bevorzugt von 1 bis 50 nm, besonders bevorzugt von 5 bis 25 nm; und/oder
b) die Kohlenstofffasern einen Durchmesser von 1 bis 100 µm, bevorzugt von 5 bis 50 µm, besonders bevorzugt von 10 bis 20 µm;
auf.

Die Kathode kann als Folie, bevorzugt mit einer Dicke von 20-1000 µm, besonders bevorzugt mit einer Dicke von 50-500 µm, insbesondere mit einer Dicke von 80-300 µm, ausgestaltet sein. Optional ist die Kathode auf ein elektrisch leitfähiges Substrat, bevorzugt auf ein Metall und/oder Kohlenstoffmaterial, aufgebracht, kann aber auch separat, d.h. ohne auf einem Substrat aufgebracht zu sein, in der erfindungsgemäßen Li-S-Batterie eingesetzt werden.

Bevorzugt ist das elektrochemisch aktive Kathodenmaterial zumindest bereichsweise auf die Oberfläche des elektrisch leitfähigen Kohlenstoffmaterials aufgebracht oder das elektrisch leitfähige Kohlenstoffmaterial auf die Oberfläche des aktiven Kathodenmaterials aufgebracht.

In einer weiteren bevorzugten Ausgestaltungsform der erfindungsgemäßen Li-S-Batterie ist die Beschichtung der Anode eine konformale Beschichtung, insbesondere eine PVD- und/oder CVD-Beschichtung, besonders bevorzugt eine PE-CVD-Beschichtung. Die Beschichtung mit PE-CVD hat den Vorteil, dass gegenüber einer Magnetronbeschichtung eine homogenere Beschichtung stattfindet.

Das leitende Substrat der Anode kann in fibrillärer Form vorliegen, bevorzugt in Form eines dreidimensionalen fibrillären Netzwerks, besonders bevorzugt in Form von Fasern, Nanofasern oder Nanotubes oder Wirrgelegen und/oder Vliesen aus den zuvor beschriebenen Fasertypen.

Liegt die Anode in fibrillärer Form vor, wurde bei der Herstellung der Beschichtung eine verbesserte Durchdringung verglichen mit einer Magnetronbeschichtung beobachtet. Dies trifft vor allem für eine Beschichtung über PE-CVD zu, wobei hier eine homogene Beschichtung über die gesamte Tiefe der fibrillären Anode bzw. des fibrillären, dreidimensionalen Netzwerks erreicht werden kann.

In dieser Hinsicht können die Fasern und/oder die den Wirrgelegen oder Vliesen zugrundeliegenden Fasern bzw. Nanofasern oder Nanotubes der Anode einen Durchmesser 1 nm bis 500 µm, bevorzugt von 10 nm bis 200 µm, weiter bevorzugt von 100 nm bis 100 µm, weiter bevorzugt von 1 bis 100 µm, weiter bevorzugt von 5 bis 50 µm, besonders bevorzugt von 10 bis 20 µm aufweisen.

Die Dicke der Beschichtung der Anode kann im Bereich von 0,1 bis 50 µm, bevorzugt von 0,5 bis 20 µm, besonders bevorzugt von 0,5 bis 2 µm liegen. Das fibrilläre, leitende Substrat der Anode kann ein Material ausgewählt aus der Gruppe bestehend aus Kohlenstoff, Graphit, Graphen, Diamond Like Carbon (DLC), Ruß und Kohlenstoffnanoröhren enthalten oder daraus bestehen.

Bevorzugt enthält die Anode Silizium und/oder Zinn in einer Gesamtmenge, bezogen auf die Gesamtmasse der Anode, von 0,1 bis 90 Gew.-%, bevorzugt von 20 bis 80 Gew.-%, besonders bevorzugt von 40 bis 70 Gew.-%.

In einer weiteren bevorzugten Ausgestaltungsform ist die Anode lithiiert. Dies kann dadurch bewerkstelligt worden sein, dass eine Lithiummetallfolie auf die Anode (z.B. Si-Anode) gepresst worden ist und nach ca. 4 bis 12 Stunden Einwirkzeit die Lithiierung stattgefunden hat.

Die Anode kann eine Gesamtdicke von 10 bis 1000 µm, bevorzugt von 20 bis 500 µm, besonders bevorzugt von 50 bis 120 µm aufweisen.

Bevorzugt ist der Elektrolyt der erfindungsgemäßen Batterie ausgewählt aus der Gruppe bestehend aus Lösungen oder Suspensionen von mindestens einem Lithiumsalz in mindestens einem cyclischen oder nichtcyclischen Ether, besonders bevorzugt Lösungen oder Suspensionen von
a) Lithium-bis(trifluormethansulfonyl)imid (LiTFSI),
b) Lithiumtrifluormethansulfonat; und/oder
c) Lithiumnitrat;
   in
   i) Dimethoxyethan (DME);
   ii) Tetraethylenglycoldimethylether (TEGDME, IUPAC: 2,5,8,11,14-Pentaoxapentadecan); und/oder
   iii) 1,3-Dioxolan (DOL).

Es wurde gefunden, dass die erfindungsgemäße Batterie enthaltend einen Elektrolyt, welcher Lithiumnitrat enthält, eine konstantere Ladeeffizienz gegenüber einer Batterie aufweist, welche kein Lithiumnitrat im Elektrolyten enthält.

Weiterhin bevorzugt ist, dass mindestens ein Separator zwischen Kathode und Anode angeordnet ist, wobei der Separator besonders bevorzugt eine permeable Folie aus einem thermoplastischen Material, insbesondere PE, PP und/oder PET, enthält oder daraus besteht.

In einer weiteren bevorzugten Ausgestaltungsform der erfindungsgemäßen Batterie sind Anode und Kathode hinsichtlich ihrer Kapazität und/oder ihrer möglichen Lade-/Entladerate aufeinander abgestimmt.
Besonders bevorzugt wird die Anode hinsichtlich ihrer Kapazität pro Elektrodenfläche gegenüber der Kathode deutlich überdimensioniert d.h. die Anode wird hinsichtlich ihrer Kapazität im Vergleich zur Kathode größer ausgelegt. Dies ist insbesondere bei langen Zyklenzeiten von Vorteil, da hierdurch eine schonende Betriebsweise der Anode ermöglicht wird. Dies verbessert somit insgesamt die Performance der Gesamtzelle.In den Anwendungsbeispielen ist die Kapazität der Anode (gemessen in der Halbzelle) 75 % höher als die der Kathode (ebenfalls in Halbzelle gemessen). In der Folge wird die Anode beim Laden / Entladen nicht voll belastet und die Volumenänderungen und Spannungen verringert.

Darüberhinaus wird ein Verfahren zum Betreiben einer Batterie gemäß einem der vorhergehenden Ansprüche bereitgestellt, welches dadurch gekennzeichnet ist, dass die Batterie
a) maximal bis zu einer verbleibenden Klemmspannung von 1,3 bis 1,7 V, bevorzugt 1,4 bis 1,6 V, insbesondere 1,45 bis 1,55 V entladen; und/oder
b) bis zu einer maximalen Klemmspannung von 2,4 bis 2,8 V, bevorzugt von 2,5 bis 2,7 V, insbesondere von 2,55 bis 2,65 V geladen;
wird.

Die erfindungsgemäße Batterie kann im Gebrauch mit hohen Entladungsraten und/oder Ladungsraten von mindestens 150-170 mA/g Schwefel betrieben werden. Es sind beispielsweise Entladungsraten von bis zu 836 mA/g Schwefel erreicht worden.

Anhand der nachfolgenden Figuren und Beispiele soll der erfindungsgemäße Gegenstand näher erläutert werden, ohne diesen auf die hier dargestellten spezifischen Ausführungsformen einschränken zu wollen.

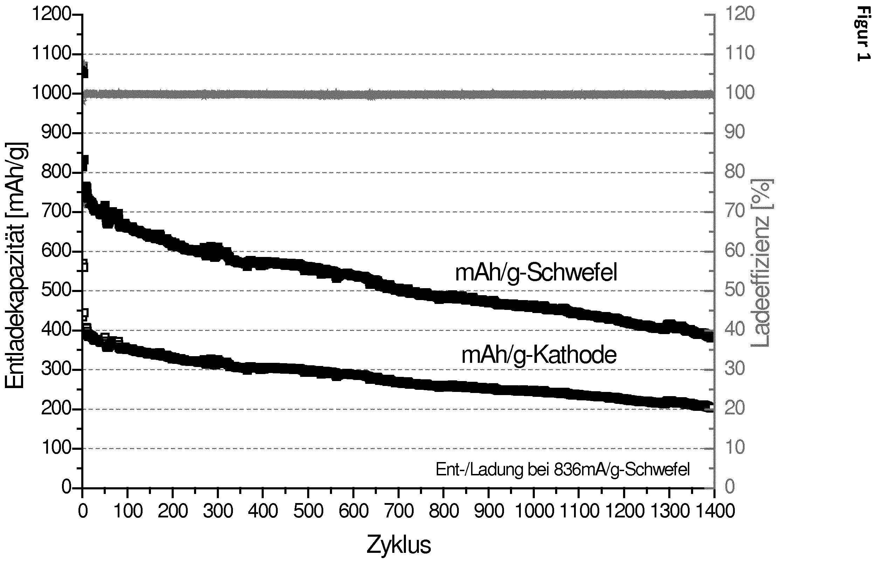

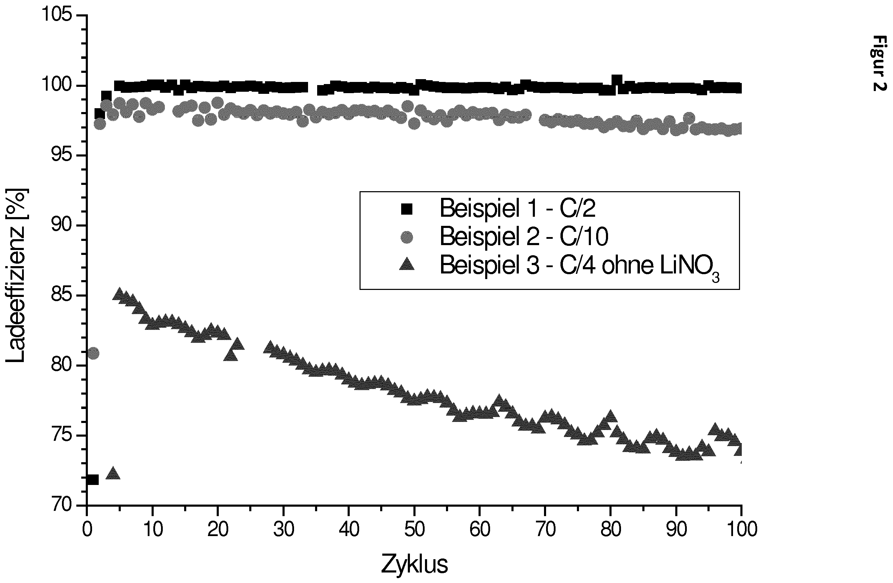

Dabei zeigt die Fig. 1 die Entladungskapazität pro Gramm Schwefel und pro Gramm Kathode einer beispielhaften, erfindungsgemäßen Li-S-Batterie im Vergleich mit einer Batterie aus dem Stand der Technik sowie Fig. 2 den Einfluss von Lithiumnitrat im Elektrolyten auf die Ladeeffizienz einer von beispielhaften, erfindungsgemäßen Li-S-Batterien.

Figur 1 beschreibt die Ladeeffizienz und die Entladekapazität einer Li-S-Batterie aus Beispiel 1. Angegeben ist die gemessene Ladeeffizienz und die Entladekapazität in Abhängigkeit von der Zahl der Entladezyklen. Es wird deutlich, dass die Ladeeffizienz über 1400 Zyklen nahezu konstant bei 1000 mAh/g (und somit bei nahezu 100% CE) bleibt, während bei der Batterie aus dem Stand der Technik eine deutliche Abnahme der Ladeeffizienz im Verlauf der Zyklen zu beobachten ist. Die Kapazität der Batterie aus Beispiel 1 nimmt über die 1400 Ladezyklen zwar kontinuierlich, aber im Vergleich zum Stand der Technik im geringen Maße, ab. Nach 1400 Zyklen beträgt die Kapazität bezogen auf die Masse des Schwefels noch 380
mAh/g. Nach Stand der Technik verlieren Li-S-Zellen in der Regel nach ca. 200 Zyklen drastisch an Kapazität (vor allem wegen Degradation / Dendriten auf Anodenseite).

Figur 2 beschreibt die Coulomb-Effizienz von Li-S-Batterien, welche Lithiumnitrat im Elektrolyten enthalten oder kein Lithiumnitrat im Elektrolyten enthalten. Es wird deutlich, dass Lithiumnitrat im Elektrolyt einen stabilisierenden Effekt auf die Ladeeffizienz der Batterie bewirkt, so dass die Ladeeffizienz für mehrere Lade- und Entladezyklen konstant gehalten werden kann.

### Beispiel 1

### Anode:

fibrilläre Kohlenstoff-Anode 0,74 mg enthaltend Si als Magnetron-gesputterte Beschichtung (Beschichtungsdicke: 4 µm) der Firma SGL Carbon SE (Handelsname GDL 10AA)
Anodendurchmesser: 10 mm
Gesamtmasse mit Stromableiter: 7,5 mg

### Kathode:

Kathode enthaltend
- 53,3 Gew.-% Schwefel (= 1,3 mg)
- 26,7 Gew.-% Kohlenstoffhohlkugeln
- 10 Gew.-% Polytetrafluorethylen (PTFE)
- 10 Gew.-% Kohlenstoffnanorohre (CNT)
Kathodendurchmesser: 10 mm

### Elektrolyt:

36 µl 1 M LiTFSI, 0,25M LiNO₃ in DME:DOL (1:1 vol)

### Weitere Bestandteile:

CR2016 Coincell (Knopfzelle der Größe (Formfaktor) 2016 (20 mm Durchmesser 1,6 mm Höhe)

Celgard® 2500 (poröse PP-Folie mit einer Dicke von 25µm und einem mittleren Porendurchmesser von 64nm sowie einer durchschnittlichen Porosität von 55%)

### Entladung/Ladung der Batterie

Erste drei Zyklen bei einem Ent-/Ladestrom von 167 mA/g-Schwefel, dann bei einem Ent-/Ladestrom von 836 mA/g-Schwefel

### Beispiel 2

### Anode:

SGL GDL 10AA fibrilläre Kohlenstoff-Anode 0,74 mg enthaltend Si als Magnetron-gesputterte Beschichtung (Beschichtungsdicke: 4 µm)
Anodendurchmesser: 10 mm
Gesamtmasse mit Stromableiter: 7,5 mg

### Kathode:

Kathode enthaltend
- 53,3 Gew.-% Schwefel (= 1,1 mg)
- 26,7 Gew.-% Kohlenstoffhohlkugeln
- 10 Gew.-% Polytetrafluorethylen (PTFE)
- 10 Gew.-% Kohlenstoffnanorohre (CNT)
Kathodendurchmesser: 10 mm

### Elektrolyt:

40 µl 1 M LiTFSI, 0,25M LiNO₃ in DME:DOL (1:1 vol)

### Weitere Bestandteile:

CR2016 Coincell
Celgard® 2500

### Entladung/Ladung der Batterie

Lade- /Entladestrom 167 mA/g Schwefel

### Beispiel 3 (ohne LiNO₃)

### Anode:

SGL GDL 10AA fibrilläre Kohlenstoff-Anode 0,74 mg enthaltend Si als Magnetron-gesputterte Beschichtung (Beschichtungsdicke: 4 µm) Anodendurchmesser: 10 mm
Gesamtmasse mit Stromableiter: 7,5 mg

### Kathode:

Kathode enthaltend
- 53,3 Gew.-% Schwefel (= 1,9 mg)
- 26,7 Gew.-% Kohlenstoffhohlkugeln
- 10 Gew.-% Polytetrafluorethylen (PTFE)
- 10 Gew.-% Kohlenstoffnanorohre (CNT)
Kathodendurchmesser: 10 mm

### Elektrolyt:

45 µl 1M LiTFSI in DME:DOL (1:1 vol)

### Weitere Bestandteile:

CR2016 Coincell
Celgard® 2500

### Entladung/Ladung der Batterie

Drei Zyklen bei Ent-/Ladestrom von 84 mA/g-Schwefel, danach Ent-/Ladestrom bei 418 mA/g-Schwefel

## Patentansprüche

1. Li-S-Batterie, umfassend
a) eine Kathode enthaltend ein elektrisch leitfähiges Kohlenstoffmaterial und ein elektrochemisch aktives Kathodenmaterial, welches Schwefel enthält oder daraus besteht
b) eine Anode enthaltend ein leitendes Substrat, welches zumindest bereichsweise mit Silizium und/oder Zinn beschichtet ist; und
c) einen zwischen Kathode und Anode angeordneten Lithium-haltigen Flüssigelektrolyten, Gel-Elektrolyten und/oder Festelektrolyten;
**dadurch gekennzeichnet, dass** die Kathode zumindest teilweise fibrillären Kunststoff enthält.

2. Batterie gemäß Anspruch 1, **dadurch gekennzeichnet, dass** die Kathode, bezogen auf das Gesamtgewicht der Kathode,
a) 40-90 Gew.-%, bevorzugt 50-80 Gew.-%, besonders bevorzugt 60-75 Gew.-% elektrochemisch aktives Kathodenmaterial;
b) 1-55 Gew.-%, bevorzugt 5-35 Gew.-%, besonders bevorzugt 10-25 Gew.-%, elektrisch leitfähiges Kohlenstoffmaterial; und/oder
c) 0,5-30 Gew.-%, bevorzugt 1-10 Gew.-%, besonders bevorzugt 2-5 Gew.-%, Kunststoff;
enthält.

3. Batterie gemäß einem der vorhergehenden Ansprüche, **dadurch gekennzeichnet, dass** die Kathode
a) ein elektrochemisch aktives Kathodenmaterial enthaltend Schwefel oder eine Lithium-Schwefel-Verbindung, bevorzugt Li₂S;
b) als elektrisch leitfähiges Kohlenstoffmaterial porösen Kohlenstoff, Ruß, Graphen, Graphit, Diamond Like Carbon (DLC), Graphite-Like-Carbon (GLC), Kohlenstofffasern, Kohlenstoffnanoröhren und/oder Kohlenstoffhohlkugeln, und/oder
c) als fibrillären Kunststoff fibrilläres Polytetrafluorethylen;
enthält.

4. Batterie gemäß dem vorhergehenden Anspruch, **dadurch gekennzeichnet, dass**
a) die Kohlenstoffnanoröhren einen Durchmesser von 0,1 bis 100 nm, bevorzugt von 1 bis 50 nm, besonders bevorzugt von 5 bis 25 nm aufweisen; und/oder
b) die Kohlenstofffasern einen Durchmesser von 1 bis 100 µm, bevorzugt von 5 bis 50 µm, besonders bevorzugt von 10 bis 20 µm;
aufweisen.

5. Batterie gemäß einem der vorhergehenden Ansprüche, **dadurch gekennzeichnet, dass** die Kathode als Folie, bevorzugt mit einer Dicke von 20-1000 µm, besonders bevorzugt mit einer Dicke von 50-500 µm, insbesondere mit einer Dicke von 80-300 µm, ausgestaltet ist und optional auf ein elektrisch leitfähiges Substrat, bevorzugt auf ein Metall und/oder Kohlenstoffmaterial, aufgebracht ist.

6. Batterie gemäß einem der vorhergehenden Ansprüche, **dadurch gekennzeichnet, dass** das elektrochemisch aktive Kathodenmaterial zumindest bereichsweise auf die Oberfläche des elektrisch leitfähigen Kohlenstoffmaterials aufgebracht ist oder das elektrisch leitfähige Kohlenstoffmaterial auf die Oberfläche des aktiven Kathodenmaterials aufgebracht ist.

7. Batterie gemäß einem der vorhergehenden Ansprüche, **dadurch gekennzeichnet, dass** die Beschichtung der Anode
a) eine PVD- und/oder CVD-Beschichtung ist, besonders bevorzugt eine PE-CVD-Beschichtung; und/oder
b) eine Dicke im Bereich von 0,1 bis 50 µm, bevorzugt von 0,5 bis 20 µm, besonders bevorzugt von 0,5 bis 2 µm aufweist.

8. Batterie gemäß einem der vorhergehenden Ansprüche, **dadurch gekennzeichnet, dass** das leitende Substrat der Anode in fibrillärer Form vorliegt, bevorzugt in Form eines dreidimensionalen fibrillären Netzwerks, besonders bevorzugt in Form von Fasern, Wirrgelegen und/oder Vliesen.

9. Batterie gemäß dem vorhergehenden Anspruch, **dadurch gekennzeichnet, dass** die Fasern und/oder die den Wirrgelegen oder Vliesen zugrundeliegenden Fasern der Anode einen Durchmesser von 1 nm bis 500 µm, bevorzugt von 10 nm bis 200 µm, weiter bevorzugt von 100 nm bis 100 µm, weiter bevorzugt von 1 bis 100 µm, weiter bevorzugt von 5 bis 50 µm, besonders bevorzugt von 10 bis 20 µm aufweisen.

10. Batterie gemäß einem der Ansprüche 8 oder 9, **dadurch gekennzeichnet, dass** das fibrilläre, leitende Substrat der Anode ein Material ausgewählt aus der Gruppe bestehend aus Kohlenstoff, Graphit, Graphen, Diamond Like Carbon (DLC), Ruß und Kohlenstoffnanoröhren enthält oder daraus besteht.

11. Batterie gemäß einem der vorhergehenden Ansprüche, **dadurch gekennzeichnet, dass** die Anode
a) Silizium und/oder Zinn in einer Gesamtmenge, bezogen auf die Gesamtmasse der Anode, von 0,1 bis 90 Gew.-%, bevorzugt von 20 bis 80. Gew.-%, besonders bevorzugt von 40 bis 70 Gew.-% enthält; und/oder
b) lithiiert ist; und/oder
c) eine Gesamtdicke von 10 bis 1000 µm, bevorzugt von 20 bis 500 µm, besonders bevorzugt von 50 bis 120 µm aufweist.

12. Batterie gemäß einem der vorhergehenden Ansprüche, **dadurch gekennzeichnet, dass** der Elektrolyt ausgewählt ist aus der Gruppe bestehend aus Lösungen oder Suspensionen von mindestens einem Lithiumsalz in mindestens einem cyclischen oder nichtcyclischen Ether, bevorzugt Lösungen oder Suspensionen von
a) Lithium-bis(trifluormethansulfonyl)imid (LiTFSI),
b) Lithiumtrifluormethansulfonat; und/oder
c) Lithiumnitrat;
in Dimethoxyethan (DME), Tetraethylengycoldimethylether (TEGDME), und/oder 1,3-Dioxolan (DOL).

13. Batterie gemäß einem der vorhergehenden Ansprüche, **dadurch gekennzeichnet, dass** mindestens ein Separator zwischen Kathode und Anode angeordnet ist, wobei der Separator bevorzugt eine permeable Folie aus einem thermoplastischen Material, insbesondere PE, PP und/oder PET, enthält oder daraus besteht.

14. Batterie nach einem der vorhergehenden Ansprüche, **dadurch gekennzeichnet dass** die Kapazität der Anode bezüglich der Kapazität der Kathode überdimensioniert ist, bevorzugt um mindestens 10%, weiter bevorzugt mindestens 50%, besonders bevorzugt mindestens 70% überdimensioniert ist.

15. Verfahren zum Betreiben einer Batterie gemäß einem der vorhergehenden Ansprüche, **dadurch gekennzeichnet, dass** die Batterie
a) maximal bis zu einer verbleibenden Klemmspannung von 1,3 bis 1,7 V, bevorzugt 1,4 bis 1,6 V, insbesondere 1,45 bis 1,55 Ventladen; und/oder
b) bis zu einer maximalen Klemmspannung von 2,4 bis 2,8 V, bevorzugt von 2,5 bis 2,7 V, insbesondere von 2,55 bis 2,65 V geladen;
wird.

## Claims

1. Li-5 battery, comprising
a) a cathode comprising an electrically conductive carbon material and an electrochemically active cathode material which comprises sulphur or consists thereof
b) an anode comprising a conducting substrate which is coated at least in regions with silicon and/or tin; and
c) a lithium-containing liquid electrolyte, gel electrolyte and/or solid electrolyte disposed between cathode and anode;
**characterised in that** the cathode at least partially comprises fibrillar plastic material.

2. Battery according to claim 1, **characterised in that** the cathode, relative to the total weight of the cathode, comprises
a) 40 - 90% by weight, preferably 50 - 80% by weight, particularly preferred 60 - 75% by weight, of electrochemically active cathode material;
b) 1 - 55% by weight, preferably 5 - 35% by weight, particularly preferred 10 - 25% by weight, of electrically conductive carbon material; and/or
c) 0.5 - 30% by weight, preferably 1 - 10% by weight, particularly preferred 2 - 5% by weight, of plastic material.

3. Battery according to one of the preceding claims, **characterised in that** the cathode comprises
a) an electrochemically active cathode material comprising sulphur or a lithium-sulphur compound, preferably Li₂S;
b) as electrically conductive carbon material, porous carbon, carbon black, graphene, graphite, diamond-like carbon (DLC), graphite-like carbon (GLC), carbon fibres, carbon nanotubes and/or carbon hollow balls, and/or
c) as fibrillar plastic material, fibrillar polytetrafluoroethylene.

4. Battery according to the preceding claim, **characterised in that**
a) the carbon nanotubes have a diameter of 0.1 to 100 nm, preferably of 1 to 50 nm, particularly preferred of 5 to 25 nm; and/or
b) the carbon fibres have a diameter of 1 to 100 µm, preferably of 5 to 50 µm, particularly preferred of 10 to 20 µm.

5. Battery according to one of the preceding claims, **characterised in that** the cathode is configured as a film, preferably with a thickness of 20 - 1,000 µm, particularly preferred with a thickness of 50 - 500 µm, in particular with a thickness of 80 - 300 µm, and optionally is applied on an electrically conductive substrate, preferably on a metal and/or carbon material.

6. Battery according to one of the preceding claims, **characterised in that** the electrochemically active cathode material is applied at least in regions on the surface of the electrically conductive carbon material or the electrically conductive carbon material is applied on the surface of the active cathode material.

7. Battery according to one of the preceding claims, **characterised in that** the coating of the anode
a) is a PVD- and/or CVD coating, particularly preferred a PE-CVD coating; and/or
b) has a thickness in the range of 0.1 to 50 µm, preferably of 0.5 to 20 µm, particularly preferred of 0.5 to 2 µm.

8. Battery according to one of the preceding claims, **characterised in that** the conducting substrate of the anode is present in fibrillar form, preferably in the form of a three-dimensional fibrillar network, particularly preferred in the form of fibres, randomly orientated fabrics and/or fleeces.

9. Battery according to the preceding claim, **characterised in that** the fibres and/or the fibres of the anode forming the basis of the randomly orientated fabrics or fleeces have a diameter of 1 nm to 500 µm, preferably of 10 nm to 200 µm, further preferred of 100 nm to 100 µm, further preferred of 1 to 100 µm, further preferred of 5 to 50 µm, particularly preferred of 10 to 20 µm.

10. Battery according to one of the preceding claims, **characterised in that** the fibrillar, conducting substrate of the anode comprises a material selected from the group consisting of carbon, graphite, graphene, diamond-like carbon (DLC), carbon black and carbon nanotubes or consists thereof.

11. Battery according to one of the preceding claims, **characterised in that** the anode
a) comprises silicon and/or tin in a total quantity, relative to the total mass of the anode, of 0.1 to 90% by weight, preferably of 20 to 80% by weight, particularly preferred of 40 to 70% by weight; and/or
b) is lithiated; and/or
c) has a total thickness of 10 to 1,000 µm, preferably of 20 to 500 µm, particularly preferred of 50 to 120 µm.

12. Battery according to one of the preceding claims, **characterised in that** the electrolyte is selected from the group consisting of solutions or suspensions of at least one lithium salt in at least one cyclic or noncyclic ether, preferably solutions or suspensions of
a) lithium-bis(trifluoromethanesulphonyl)imide (LiTFSI),
b) lithium trifluoromethanesulphonate; and/or
c) lithium nitrate;
in dimethoxyethane (DME), tetraethylene glycol dimethyl ether (TEGDME) and/or1,3-dioxolane (DOL).

13. Battery according to one of the preceding claims, **characterised in that** at least one separator is disposed between cathode and anode, the separator comprising preferably a permeable film made of a thermoplastic material, in particular PE, PP and/or PET, or consisting thereof.

14. Battery according to one of the preceding claims, **characterised in that** the capacity of the anode is over-dimensioned relative to the capacity of the cathode, preferably by at least 10%, further preferred at least 50%, particularly preferred at least 70%.

15. Method for operating a battery according to one of the preceding claims, **characterised in that** the battery
a) is discharged at most to a residual terminal voltage of 1.3 to 1.7 V, preferably 1.4 to 1.6 V, in particular 1.45 to 1.55 V; and/or
b) is charged up to a maximum terminal voltage of 2.4 to 2.8 V, preferably of 2.5 to 2.7 V, in particular of 2.55 to 2.65 V.

## Revendications

1. Batterie Li-S, comprenant
a) une cathode contenant un matériau de type carbone électriquement conducteur et un matériau de cathode électrochimiquement actif, qui contient du soufre ou en est constitué,
b) une anode contenant un substrat conducteur, qui au moins par zones est revêtu de silicium et/ou d'étain ; et
c) un électrolyte liquide, un électrolyte gel et/ou un électrolyte solide, contenant du lithium, disposés entre la cathode et l'anode ;
**caractérisée en ce que** la cathode contient au moins partiellement un matériau plastique fibrillaire.

2. Batterie selon la revendication 1, **caractérisée en ce que** la cathode contient, par rapport au poids total de la cathode,
a) 40 à 90 % en poids, en particulier 50 à 80 % en poids, d'une manière particulièrement préférée 60 à 75 % en poids du matériau de cathode électrochimiquement actif ;
b) 1 à 55 % en poids, de préférence 5 à 35 % en poids, d'une manière particulièrement préférée 10 à 25 % en poids, du matériau de type carbone électriquement conducteur ; et/ou
c) 0,5 à 30 % en poids, de préférence 1 à 10 % en poids, d'une manière particulièrement préférée 2 à 5 % en poids du matériau plastique.

3. Batterie selon l'une des revendications précédentes, **caractérisée en ce que** la cathode contient
a) un matériau de cathode électrochimiquement actif, contenant du soufre ou un composé lithium-soufre, de préférence Li₂S ;
b) en tant que matériau de type carbone électriquement conducteur, du carbone poreux, du noir de carbone, du graphène, du graphite, du carbone sous forme de diamant amorphe (DLC), du carbone de type graphite (GLC), des fibres de carbone, des nanotubes de carbone et/ou des billes creuses de carbone, et/ou
c) en tant que matériau plastique fibrillaire, du polytétrafluoréthylène fibrillaire.

4. Batterie selon la revendication précédente, **caractérisée en ce que**
a) les nanotubes de carbone présentent un diamètre de 0,1 à 100 nm, de préférence de 1 à 50 nm, d'une manière particulièrement préférée de 5 à 25 nm ; et/ou
b) les fibres de carbone présentent un diamètre de 1 à 100 µm, de préférence de 5 à 50 µm, d'une manière particulièrement préférée de 10 à 20 µm.

5. Batterie selon l'une des revendications précédentes, **caractérisée en ce que** la cathode est configurée sous forme d'un feuillet, ayant de préférence une épaisseur de 20 à 1000 µm, d'une manière particulièrement préférée une épaisseur de 50 à 500 µm, en particulier une épaisseur de 80 à 300 µm, et en option est appliquée sur un substrat électriquement conducteur, de préférence sur un métal et/ou sur un matériau de type carbone,

6. Batterie selon l'une des revendications précédentes, **caractérisée en ce que** le matériau de cathode électrochimiquement actif est appliqué au moins par zones sur la surface du matériau de type carbone électriquement conducteur, ou que le matériau de type carbone électriquement conducteur est appliqué sur la surface du matériau de cathode actif.

7. Batterie selon l'une des revendications précédentes, **caractérisée en ce que** le revêtement de l'anode
a) est un revêtement PVD et/ou CVD, d'une manière particulièrement préférée un revêtement PE-CVD, et/ou
b) présente une épaisseur comprise dans la plage de 0,1 à 50 µm, de préférence de 0,5 à 20 µm, d'une manière particulièrement préférée de 0,5 à 2 µm.

8. Batterie selon l'une des revendications précédentes, **caractérisée en ce que** le substrat conducteur de l'anode se présente sous forme fibrillaire, de préférence sous forme d'un réseau fibrillaire tridimensionnel, d'une manière particulièrement préférée sous forme de fibres, de grilles à fibres enchevêtrées, et/ou de non-tissés.

9. Batterie selon l'une des revendications précédentes, **caractérisée en ce que** les fibres et/ou les fibres de l'anode, qui sont à la base des grilles à fibres enchevêtrées ou des non-tissés, présentent un diamètre de 1 nm à 500 µm, de préférence de 10 nm à 200 µm, d'une manière plus préférée de 100 nm à 100 µm, d'une manière plus préférée de 1 à 100 µm, d'une manière plus préférée de 5 à 50 µm, d'une manière particulièrement préférée de 10 à 20 µm.

10. Batterie selon l'une des revendications 8 ou 9, **caractérisée en ce que** le substrat conducteur fibrillaire de l'anode contient un matériau choisi dans le groupe consistant en le carbone, le graphite, le graphène, le carbone sous forme de diamant amorphe (DLC), le noir de carbone ou les nanotubes de carbone, ou en est constitué.

11. Batterie selon l'une des revendications précédentes, **caractérisée en ce que** l'anode
a) contient du silicium et/ou de l'étain en une quantité totale, rapportée à la masse totale de l'anode, de 0,1 à 90 % en poids, de préférence de 20 à 80 % en poids, d'une manière particulièrement préférée de 40 à 70 % en poids ; et/ou
b) est lithiée ; et/ou
c) présente une épaisseur totale de 10 à 1000 µm, de préférence de 20 à 500 µm, d'une manière particulièrement préférée de 50 à 120 µm.

12. Batterie selon l'une des revendications précédentes, **caractérisée en ce que** l'électrolyte est choisi dans le groupe consistant en les solutions ou les suspensions d'au moins un sel de lithium dans au moins un éther cyclique ou acyclique, de préférence de solutions ou suspensions
a) de bis(trifluorométhanesulfonyl)imidure de lithium (LiTFSI),
b) de trifluorométhanesulfonate de lithium ; et/ou
c) de nitrate de lithium ;
dans le diméthoxyéthane (DME), dans l'éther diméthylique du tétraéthylèneglycol (TEGDME), et/ou dans le 1,3-dioxolanne (DOL).

13. Batterie selon l'une des revendications précédentes, **caractérisée en ce qu'**au moins un séparateur est disposé entre la cathode et l'anode, le séparateur contenant de préférence un feuillet perméable en un matériau thermoplastique, en particulier en PE, PP et/ou PET, ou en étant constitué.

14. Batterie selon l'une des revendications précédentes, **caractérisée en ce que** la capacité de l'anode est surdimensionnée par rapport à la capacité de la cathode, et est surdimensionnée de préférence d'au moins 10 %, d'une manière plus préférée d'au moins 50 %, d'une manière particulièrement préférée d'au moins 70 %.

15. Procédé pour l'exploitation d'une batterie selon l'une des revendications précédentes, **caractérisé en ce que** la batterie
a) est déchargée au maximum jusqu'à une tension résiduelle aux bornes de 1,3 à 1,7 V, de préférence de 1,4 à 1,6 V, en particulier de 1,45 à 1,55 V ; et/ou
b) est chargée jusqu'à une tension maximale aux bornes de 2,4 à 2,8 V, de préférence de 2,5 à 2,7 V, en particulier de 2,55 à 2,65 V.
